# EUROPEAN PATENT APPLICATION

(11) **EP 2 548 902 A1**
(43) Date of publication of application: **23.01.2013**
(21) Application number: 12176873.3
(22) Date of filing: 18.07.2012
(51) Int. Cl.: C08G 8/22, C08L 61/12, D06P 1/00, D06P 5/00

(54) **Composition and method for improving adhesion of textile substrates to rubber and articles resulting therefrom**

(30) Priority: 19.07.2011 US 201161509212 P; 10.07.2012 US 201213545216
(71) Applicant: Milliken & Company, Spartanburg, SC 29303 (US)
(72) Inventor: Brown, Harold M., Lyman, SC South Carolina 29365 (US); Creech, John H., Moore, SC South Carolina 29369 (US)
(74) Representative: HOFFMANN EITLE

(57) **Abstract**

This invention relates to compositions and methods for improving the adhesion of textile substrates to rubber or rubber-containing materials. Also encompassed herein are articles that contain textile substrates treated with such compositions. The composition generally comprises at least one phenol compound, at least one aldehyde compound, and at least one fluorocarbon-containing compound. The composition provides: (a) improved adhesion between textile substrates treated with the composition and rubber materials and (b) anti-wicking properties to end-use articles containing the treated substrates.

## Description

### TECHNICAL FIELD

This invention relates to compositions and methods for improving the adhesion of textile substrates to rubber or rubber-containing materials. Also encompassed herein are articles that contain textile substrates treated with such compositions. The composition generally comprises at least one phenol compound, at least one aldehyde compound, and at least one fluorocarbon-containing compound. The composition provides: (a) improved adhesion between textile substrates treated with the composition and rubber materials and (b) anti-wicking properties to end-use articles containing the treated substrates.

### BACKGROUND

Composite materials comprised of multiple layers of textile substrate and rubber are often plagued by the problem of delamination wherein the layers of the composite material separate, either in whole or in part, from one another. Failure typically occurs at the textile substrate to rubber interface.

As one example, printing blankets, which are typically constructed by laminating multiple layers of fabric with adhesives and separate layers of rubber, experience delamination in their end use when they are wrapped around a metal cylinder and are rotated at high speed. In an effort to reduce delamination occurrence and / or frequency, one current solution is to treat the textile substrate with a resorcinol-formaldehyde-latex ("RFL") composition to improve adhesion at the textile substrate - rubber interface. RFL compositions offer some improved delamination performance, but there are still failures and the market desires further improvements. Additionally, the RFL compositions exhibit some heat degradation during the rubber vulcanization processing step. Finally, RFL compositions are costly to manufacture and, in some instances, require multiple passes down a finishing range to complete their application to textile substrates, such as printing blanket fabrics.

Another issue presented by printing blanket use is the problem associated with the wicking of solvents into the fabric layers of the printing blanket which leads to further and oftentimes more progressive delamination of the fabric from the rubber. During normal use, a printing blanket is often exposed to cleaning solvents which are used to clean the blanket. These solvents are inadvertently absorbed by the visible edges of the fabric comprising the printing blanket. The solvent-containing material travels inward, often a significant distance, toward the center of the printing blanket and causes that fabric layer to lose its adhesion to the adjacent rubber layer.

Thus, the proposed solution provided herein represents an advance in the art by significantly improving the adhesion of textile substrate to rubber, by reducing solvent wicking in the textile substrate layer (particularly in printing blankets), and by eliminating the issue of heat degradation exhibited by current RFL compositions. Furthermore, the adhesive composition provided herein provides a cost savings versus current RFL compositions and simplifies the printer blanket manufacturing process, primarily by allowing application of the adhesive-promoting composition to textile substrates in a single finishing range pass.

### BRIEF SUMMARY

Provided herein is the following:
(1) A composition for adhering a textile substrate to a rubber material, said composition comprising an aqueous mixture of at least one phenol compound, at least one aldehyde compound, and at least one fluorocarbon-containing compound.
(2) The composition defined in (1), wherein the at least one phenol compound is resorcinol.
(3) The composition defined in (1), wherein the at least one aldehyde compound is formaldehyde.
(4) The composition defined in (1), wherein the at least one fluorocarbon-containing compound is a non-ionic fluorocarbon having an average carbon chain length of six.
(5) The composition defined in (1), wherein the amount of fluorocarbon-containing compound is in the range from about 0.1 % to about 20% by weight.
(6) The composition defined in (5), wherein the amount of fluorocarbon-containing compound is in the range from about 0.5% to about 15% by weight.
(7) The composition defined in (5), wherein the amount of fluorocarbon-containing compound is in the range from about 1% to about 5% by weight.
(8) A textile substrate having a first surface and a second surface wherein a composition for adhering the textile substrate to a rubber material is applied to at least the first surface of the textile substrate, said composition comprising an aqueous mixture of at least one phenol compound, at least one aldehyde compound, and at least one fluorocarbon-containing compound.
(9) An article comprising a textile substrate and a rubber material, wherein said textile substrate is adhered to said rubber material with an adhesive composition comprising an aqueous mixture of at least one phenol compound, at least one aldehyde compound, and at least one fluorocarbon-containing compound.
(10) A printing blanket comprising at least one layer of textile substrate and at least one layer of a rubber material, wherein said at least one layer of textile substrate is adhered to said at least one layer of rubber material with an adhesive composition comprising an aqueous mixture of at least one phenol compound, at least one aldehyde compound, and at least one fluorocarbon-containing compound.
(11) The printing blanket defined in (10), wherein the textile substrate is a woven fabric.
(12) The printing blanket defined in (11), wherein the woven fabric is comprised of fibers selected from the group consisting of 100% polyester, blends of polyester and regenerated cellulose, and blends of polyester and cotton.
(13) The printing defined in (10), wherein the rubber material is nitrile rubber.
(14) The printing blanket defined in (10), wherein the at least one phenol compound is resorcinol.
(15) The printing blanket defined in (10), wherein the at least one aldehyde compound is formaldehyde.
(16) The printing blanket defined in (10), wherein the at least one fluorocarbon-containing compound is a non-ionic fluorocarbon having an average carbon chain length of six.
(17) A process for treating a textile substrate to facilitate the subsequent formation of strong bonds with rubber during vulcanization of the rubber, which comprises the steps of (a) impregnating the textile substrate with a composition comprising an aqueous mixture of at least one phenol compound, at least one aldehyde compound, and at least one fluorocarbon-containing compound, and (b) drying the impregnated textile substrate.
(18) The process defined in (17), wherein the at least one phenol compound is resorcinol.
(19) The process defined in (17), wherein the at least one aldehyde compound is formaldehyde.
(20) The process defined in (17), wherein the at least one fluorocarbon-containing compound is a non-ionic fluorocarbon having an average carbon chain length of six.

### DETAILED DESCRIPTION

All U.S. and foreign patents and U.S. patent applications disclosed in this specification are hereby incorporated by reference in their entirety. Without limiting the scope of the invention, the preferred features and embodiments of the invention are hereinafter set forth. Unless otherwise indicated, all parts, percentages and ratios are by weight.

The term "copolymer" is intended to include polymers containing two, three or more types of monomer units.

The term "fluorocarbon-containing compound" is intended to describe a polymeric material containing at least one fluorinated segment.

The term "padded" indicates that a liquid coating was applied to a substrate by passing the substrate through a bath and subsequently through squeeze rollers.

Resorcinol-formaldehyde-latex ("RFL") chemistry is known to be used as an adhesion promoter between various textile substrates and rubber or rubber-containing articles. However, the standard RFL composition, such as that used in printing blanket and tire manufacturing processes, includes a functionalized rubber latex component. The functionalized rubber latex is generally characterized as a rubber latex having pendant carboxyl, amide or pyridyl functionalities, such as that described in USPN 5,565,507 to Marco et al. Latex is generally the most expensive and highest volume non-water component of current standard RFL mixes. Latex typically causes a variety of processing difficulties, and in some instances, appears to actually adversely impact adhesion when compared with a latex-free resorcinol-formaldehyde composition.

Provided herein is an adhesive composition comprised of a resorcinol component ("R"), an aldehyde component ("F"), and an anti-wicking fluorocarbon component ("AW"). The RF-AW composition may be applied to textile substrates for improving the adhesion between the treated textile substrate and rubber or rubber-containing articles. This treatment process may be ideally suited for use in the manufacturing of printing blankets, tires and/or tire cord, conveyor belts, and any other end-use article that requires the adhesion of two layers of material together.

The use of RF-AW chemistry, particularly for printing blankets, as a means of promoting adhesion to rubber combined with an additional fluorocarbon chemistry to retard solvent wicking (minimizing swelling of the textile components and reducing solvent exposure to the interior blanket structure), collectively assisting in the prevention of delamination at the fabric-rubber interface is not currently known to exist anywhere in the market. An unexpected benefit of this combination of chemical compounds was discovered because fluorocarbon-containing compounds added to fabrics to increase repellency generally have the unintended side effect of reducing adhesion (when compared with an untreated fabric). In the case of the anti-wicking fluorocarbon compounds described herein, solvent repulsion is readily observable with improved adhesion properties. In fact, adhesion values in many of the formulations described herein are far superior to untreated samples across a variety of different fabrics.

The resorcinol compounds suitable for use in the present invention may be represented by Structure (I): 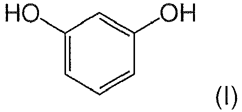 Resorcinol (CAS No. 108-46-3) is a white crystalline compound. The chemical is soluble in water and has a low vapor pressure and n-octanol/water partition coefficient. It has the chemical formula C₆H₆O₂, and its relative molecular mass is 110.11. The IUPAC name is 1,3-dihydroxybenzene; other names are resorcin, 1,3-benzenediol, m-benzenediol, m-dihydroxybenzene, m-hydroquinone, and 3-hydroxyphenol. Resorcinol can be regarded as a phenol derivative in which a hydrogen atom is substituted by a hydroxyl group in the meta position to the OH.

Any suitable aldehyde material may be used as the aldehyde component of the present invention. Aldehydes having the following chemical Structures may be used as the aldehyde component: 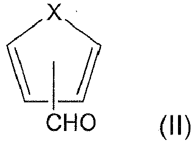 wherein X is selected from the group consisting of oxygen, nitrogen, and sulfur; 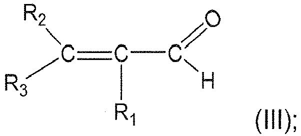 and 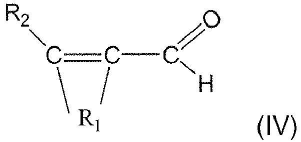 wherein R₁, R₂ and R₃ are independently selected from the group consisting of alkyl, aryl, halo, hydrogen, carboxylic and other organic functional groups.
Exemplary aldehydes may include, but are not limited to, formaldehyde, paraformaldehyde, acetaldehyde, furfural, cinnamic aldehyde, crotonaldehyde, α,β-unsaturated aldehydes, benzyl aldehyde, propylaldehyde, butyraldehyde, iso butylaldehyde, 2-pyridinecarboxaldehyde, 3-pyridinecarboxaldehyde, 4-pyridinecarboxaldehyde, 2,6-pyridinedicarboxaldehyde, phthalic 1,2-dicarboxaldehyde, phthalic 1,3-dicarboxaldehyde, phthalic 1,4-dicarboxaldehyde, o-sulfo-benzoic aldehyde, and/or the following:

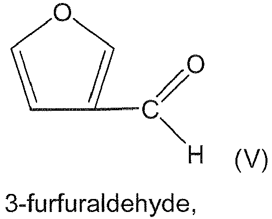

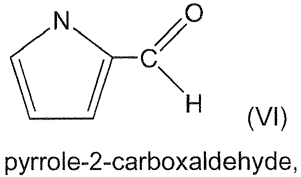

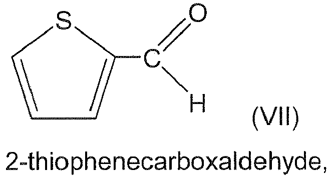

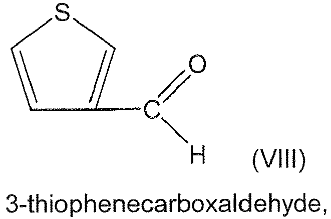

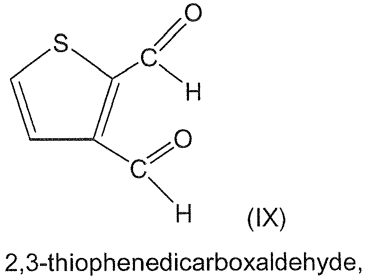

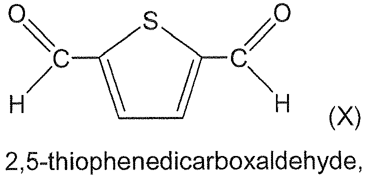

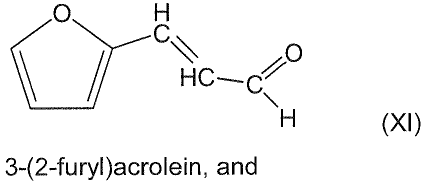

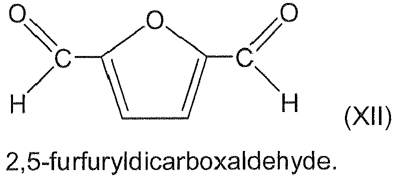

In one aspect, the aldehyde component may contain one carbon atom. In another aspect, the aldehyde component may contain at least two carbon atoms. Mixtures of the afore-mentioned aldehydes may also be used together to form the aldehyde component of the present invention.

In another aspect, in general, any of the aldehyde components described above, combined with formaldehyde, may be reacted with a phenolic compound to produce a phenolic condensate component. The non-crosslinked resorcinol-formaldehyde resin, non-crosslinked resorcinol-furfuraldehyde condensate or phenolic resin may be prepared by reacting 2-furfuraldehyde with resorcinol or a phenol compound with excess amount of resorcinol functional group or phenol group and to stop the reaction before a gel point is reached. The reaction is typically catalyzed with a base, such as sodium hydroxide, and is carried out in an aqueous solution. The reaction may also be carried out in an inert atmosphere (such as under a nitrogen blanket) at elevated temperatures (typically between about 50°C and 120°C or between about 60°C and 90°C). An inert atmosphere prevents unwanted oxidation of the phenol group in the condensate. Generally, any phenol-containing compounds that are capable of undergoing chemical reactions with an aldehyde may be used to prepare the phenolic condensate.

Combinations of resorcinol and formaldehyde in varying ratios and at varying temperatures and pH levels and solids content are suitable are also provided herein. The molar ratio of resorcinol (or other phenolic components) and an aldehyde may be between about 1:0.5 and about 1:1.1. When formaldehyde is used as the aldehyde component, the ratio may be between about 1:0.5 and about 1:0.8, or between about 1:0.6 and about 1:0.7. When 2-furfuraldehyde is used, the molar ratio of resorcinol to 2-furfuraldehyde may range from between about 1:1.1 and about 1:0.6, between about 1:1 and about 1:0.8, or between about 1:1 and about 1:0.9.

A mixture of two or more aldehydes and/or phenolic monomers may be used to prepare the phenolic condensate. For example, a mixture of formaldehyde and 2-furfuraladehyde may be used to react with resorcinol to form a phenolic condensate. The resulted reaction product is typically a free-flowing viscous liquid. To improve the storage stability of the resulted reaction product, an acid or a buffer may be added to the liquid to neutralize at least part of the base catalyst used in the reaction. The amount of base catalyst may vary depending on the phenolic compound and aldehyde used. The base catalyst typically ranges from 0.1 % to about 5% in a reaction mixture. Due to the excess amount of phenol group in the reaction product, the phenolic condensate may react further with an aldehyde component described herein, and may form a crosslinked phenolic condensation polymer. Alternative, the phenolic condensate may be prepared by using excess amount of aldehyde component. The phenolic condensate may be subsequently mixed with a phenolic compound before applied to a textile and then may be dried and cured.

In another aspect, a non-crosslinked phenolic condensate, such as a resorcinol-formaldehyde condensate, a non-crosslinked resorcinol-furfuraldehyde condensate or a phenol-formaldehyde condensate that is soluble in water may be suitable for use in the present invention. In these instances, the resorcinol and formaldehyde maybe be combined together as a resorcinol-formaldehyde condensate and/or resin. Commercially available examples of resorcinol-formaldehyde resins include, without limitation, Penacolite® Resin B-16-S, Penacolite® Resin I-168-L, and Penacolite Resin R -2170 (available from Indspec). Mixtures of the aforementioned condensates may be suitable for use in the present invention.

In one aspect, the molar amount of aldehyde included in the adhesive composition may be in excess of the molar amount of phenol included in the composition. This ratio of aldehyde to phenol typically ensures condensation of all of the phenol during the vulcanization process.

A small amount of a catalyst or condensing agent, such as sodium hydroxide, potassium hydroxide or hexamethylene tetramine, may be included in the adhesive composition. The amount will vary with the specific adhesive composition, but may be in the range of from 0.01 % to 1% by weight.

Suitable fluorocarbon-containing compounds for use in the present invention include perfluoroacrylate polymers and/or copolymers, copolymers comprising a straight or branched perfluoroalkyl group or a perfluorinated ether group that contributes to low surface tension, fluorocarbon-containing urethanes, polytetrafluoroethylene and its copolymers, and mixtures thereof. Such compositions based on perfluorinated alkyl groups are described, for example, in U.S. Pat. No. 5,276,175 to Dams et al. and in EP 435 641 B1. Perfluorinated polyether compounds have been disclosed in EP 1 038 919 B1, EP 273 449 B1, JP-A-04-146917, JP-A-10-081873, U.S. Pat. No. 3,536,710 to Bartlett, U.S. Pat. No. 3,814,741 to Caporiccio et al., U.S. Pat. No. 3,553,179 to Bartlett, and U.S. Pat. No. 3,446,761 to Antonelli et al.

The perfluoroalkyl group may be represented by the chemical structure CF₃(CF₂)ₙ wherein n is an integer greater than 3; in one aspect, n is an integer in the range from 4 to 300; or, in another aspect, n is an integer in the range from 4 to 200; or, in another aspect, n is an integer in the range from 4 to 100. In one aspect, the fluorocarbon-containing compound is a water repellent polymer containing a perfluoroalkyl group having an average carbon chain length of four carbons atoms. In another aspect, the fluorocarbon-containing compound is a water repellent polymer containing a perfluoroalkyl group having an average carbon chain length of six carbons atoms. In yet a further aspect, the fluorocarbon-containing compound is a water repellent polymer containing a perfluoroalkyl group having an average carbon chain length of eight carbons atoms. The fluorocarbon-containing compound can be blended with other organic or inorganic materials before applying to a fabric as a treatment, as long as the treatment affords an ink contact angle of at least 90° on the treated fabric. Polyacrylate and urethane copolymer compositions comprising perfluoroalkyl groups with an average carbon chain length of from six to eight carbons may be preferred. It may be preferable that the fluorocarbon-containing compound is nonionic in nature.

The amount of fluorocarbon-containing compound included in the adhesive composition may be in the range from about 0.1 % to about 20%, or in the range from about 0.5 % to about 15%, or even in the range from about 1% to about 5% by weight of the composition.

The RF-AW adhesive composition is generally aqueous with a solids content of from 2 to 60 wt %, or from 7 to 40 wt %. The aqueous adhesive composition may be applied to a textile substrate to give an add-on of from 1 to 30 wt % solids based on a weight of the untreated textile substrate, preferably 5 to 15 wt % solids.

One or more optional additives may be included in the adhesive composition of the present invention. In one embodiment, the adhesive composition may include a tacky resin. The tacky resin may be selected from the group consisting of phenol-containing resins (such as phenol formaldehyde resin, resorcinol formaldehyde condensate, condensate of phenol derivatives with aldehydes and acetylene, terpene phenolic resins), aromatic resins, hydrocarbon resins, terpene resins, indene resins, coumarone resins, rosin-based resins, and mixtures thereof. The tacky resin may be included at 2% - 50%, 2% - 30%, 5% - 20%, or 8% - 20% by weight based on the total dry weight of the adhesion composition. For example, a hydrocarbon tacky resin, a rosin ester resin or mixture thereof may be further included in the adhesion composition at about 10% - 18% based on the total dry weight of the formulation. Suitable tacky resins are also described in US Patent Application Serial Nos. 13/107,015 and 13/107,027, both to Michiels et al., filed on May 13, 2011, which are entirely incorporated by reference herein.

Optional additives included in the adhesive composition may also include stabilizers (such as diphenylamine-based stabilizers; heat stabilizers such as mica and quartz), antioxidants (such as phenolic-based antioxidants, such as hindered phenolic antioxidants or hindered phenolic antioxidants with thio synergist; and hydroquinoline compounds), electrical discharge dissipaters, ozone and ultraviolet stabilizers (such as Hydrowax Q - solid saturated hydrocarbons), wetting agents, emulsifiers, additional adhesion promoters, antiozonants, rheology modifiers, pH buffers and mixtures thereof. Antioxidants may include hindered phenol compounds, acylphenylenediamine compounds, diphenylamine compounds, mercaptan compounds, thioester compounds, thioether compounds, hydroquinoline compounds, and mixtures thereof. Adhesion promoters may include blocked isocyanate-containing compounds, unblocked isocyanate-containing compounds, epoxy-containing compounds, hexamethoxymethyl melamine ("HMMM") resins, and mixtures thereof. Carbon black and/or silica may also be included as optional additives in the adhesion composition. The adhesive composition may optionally include a rubber component.

Textile substrates, such as fabrics, that may be treated with the adhesive composition of the present invention may be characterized as having a woven (e.g. leno weave or laid scrim), nonwoven, or knit (e.g. warp knit, weft inserted warp knit, or raschel knit) construction. Fiber types comprising the textile substrate include synthetic fibers, natural fibers, and mixtures thereof. Synthetic fibers include, for example, polyester, acrylic, polyamide, polyolefin, polyaramid, polyurethane, regenerated cellulose (e.g. rayon and lyocell), and blends thereof. The term "polyamide" is intended to describe any long-chain polymer having recurring amide groups as an integral part of the polymer chain. Examples of polyamides include nylon 6; nylon 6, 6; nylon 1, 1; and nylon 6, 10. The term "polyester" is intended to describe any long-chain polymer having recurring ester groups. Examples of polyesters include aromatic polyesters, such as polyethylene terephthalate (PET), polybutylene terephthalate (PBT), polytrimethylene terephthalate (PTT), and polytriphenylene terephthalate, and aliphatic polyesters, such as polylactic acid (PLA). "Polyolefin" includes, for example, polypropylene, polyethylene, and combinations thereof. "Polyaramid" includes, for example, poly-*p-*phenyleneteraphthalamid (i.e., Kevlar®), poly-*m*-phenyleneteraphthalamid (i.e., Nomex®), and combinations thereof. Natural fibers include, for example, wool, cotton, flax, and blends thereof. In one aspect, the textile substrate is a woven fabric comprised of natural fibers in the warp direction (such as cotton) and synthetic fibers in the fill direction (such as polyester).

The textile substrate may be formed from fibers or yarns of any size, including microdenier fibers and yarns (fibers or yarns having less than one denier per filament). The fibers or yarns may have deniers that range from less than about 1 denier per filament to about 2000 denier per filament or more preferably, from less than about 1 denier per filament to about 500 denier per filament, or even more preferably, from less than about 1 denier per filament to about 300 denier per filament.

Furthermore, the textile substrate may be partially or wholly comprised of multi-component or bi-component fibers or yarns, which may be splittable, or which have been partially or fully split, along their length by chemical or mechanical action. The textile substrate may be comprised of fibers such as staple fiber, filament fiber, spun fiber, or combinations thereof.

To the textile substrate may be added any other standard textile additives, such as dyes, colorants, pigments, ultraviolet absorbers, antioxidants, and the like. The textile substrate may optionally be colored by a variety of dyeing techniques, such as high temperature jet dyeing with disperse dyes, vat dyeing, thermosol dyeing, pad dyeing, transfer printing, screen printing, or any other technique that is common in the art for comparable textile products.

The rubber component which is adhered to the textile substrate is typically unvulcanized, or elastomeric, rubber. Unvulcanized rubber includes any polymeric material having unsaturated carbon-carbon bonds that are capable of crosslinking with each other. Exemplary unvulcanized rubbers include polybutadiene rubber, polyisoprene rubber (such as synthetic trans-rich polyisoprene or cis-rich polyisoprene rubber), natural rubber, polyurethane rubber, nitrile rubber, poly(styrene-co-butadiene) rubber, poly(acrylonitrile-co-butadiene) rubber, chloroprene rubber (such as Neoprene@), styrene-butadiene rubber, hydrogenated styrene-butadiene rubber, carboxylated styrene-butadiene rubber, nitrile-butadiene rubber, hydrogenated nitrile-butadiene rubber, carboxylated nitrile-butadiene rubber, ascium rubber, hypalon rubber, acrylonitrile-butadiene rubber, butyl rubber, fluorinated rubber (such as Viton®), silicone rubber, chlorobutyl rubber, bromobutyl rubber, ethylene-propylene-diene rubber, polyisobutylene copolymer rubber, halo-butyl rubber, polysulfide rubber, copolymer rubbers (such as random, alternating, block, multiblock, graft, multigraft, comb, star, branched and/or dendritic copolymers comprising at least one of ethylene, propylene, butadiene, isoprene, styrene, isobutylene, and the like, fully or partially hydrogenated versions thereof, or a combination thereof), and the like, as well as mixtures and copolymers thereof. Nitrile rubber (particularly nitrile rubber latex) and mixtures comprising nitrile rubber latex and polybutadiene may be preferred. Furthermore, a combination of vinylpyridine latex with nitrile rubber latex may be preferred.

The rubber may be in the form of latex, emulsion, or solvent solution before combined with other components and subsequently applied to a textile substrate. Any standard rubber additives, including ultraviolet absorbers, antioxidants, dyes, pigments, colorants, curing agents, perfumes, antistatic agents, fillers (such as carbon black), reinforcing agents (such as clay, talc and silica), tackifying agents (such as wood resin), phenol-formaldehyde resins, aromatic oils, oligomeric oils (such as phthalate oils), surface active compounds (such as silane), and the like may be added to the rubber.

The unvulcanized rubber, after being applied to a textile substrate, can be further vulcanized (crosslinked) in the presence of a curing agent or by virtue of being in contact with another rubber compound comprising a curing agent. The curing agent may be a sulfur-based curing agent, organic peroxide, or other chemical agent that can cause effective crosslinking (curing) of the rubber material. Additional RF-AW and/or RFL components may be incorporated in the rubber for crosslinking purposes. Detailed information on curing agents and other additives that may be included with the unvulcanized rubber may be found in Vanderbilt Rubber Handbook.

The adhesive composition may be applied to a textile substrate through any technique known in the art for applying a chemical mixture to a substrate. For example, the adhesive composition may be applied to the textile substrate via spraying, dipping, padding, foaming, printing, coating, application from a kiss roll, and the like. The use of engraved rollers, a three roller system, a rotary screen, and/or a double-sided vertical system may be employed in the application process.

One exemplary acceptable method of applying the adhesive composition to a textile substrate includes padding the adhesive composition from a bath mixture, which generally results in coating both surfaces of the textile substrate in one step. The components of the adhesive composition are combined together to form a mixture. The mixture is then added to a pan or a trough through which the textile substrate (e.g. a fabric) is routed by means of threading around guide rollers. As it passes through the trough containing the chemical mixture, both sides of the fabric are coated with the adhesive composition. The amount of liquor allowed to remain on the fabric is controlled by a nip roller with adjustable pressure at the exit of the pad. The coated textile substrate is dried at a temperature of about 325°F in a pre-dryer, followed by a tenter, where heated air is blown over the coated textile substrate.

In one aspect, the adhesive composition is applied to the textile substrate by dipping, spraying or brushing; the treated textile substrate is then dried at a temperature in the range from about 180°F to 270°F, or in the range from about 225°F to 250°F, for an effective time, typically, about 2 minutes. The treated textile substrate is then heat set in an oven for about 1 to 3 minutes at a temperature in the range of from about 300°F to about 450°F, or in the range from about 350°F to about 400°F.

In contrast, this application method differs from typical RFL treatment of textile substrates because RFL coated fabrics generally require a first pass down a textile range so that the textile substrate can be washed and, oftentimes, stretched in order to prepare it for the latex-containing composition. A second pass down the textile range is then needed for application of the RFL composition.

In a further aspect of the present invention, a woven fabric is dipcoated by immersion in the aqueous adhesive composition at ambient conditions. By using one or more of these application techniques, the adhesive composition may be applied to only one surface of a textile substrate, or it may be applied to both surfaces of a textile substrate. The adhesive composition may be applied in a uniform or in a non-uniform manner to at least one surface of the textile substrate.

Additionally, the curing step between the treated textile substrate and the rubber compound may be performed in any conventional manner, such as through heat-activated vulcanization in the presence of a curing agent (such as organic peroxide). Non-limiting examples of application methods which may be useful are provided in US Patent Application Serial No. 12/661,170, "Pattern Coated Cap Ply For Tire Construction," to Michiels et al., filed March 11, 2010; USPN 6,602,379 to Li et al.; 6,046,262 to Li et al.; 6,333,281 to Li et al.; 6,444,322 to Li et al.; 6,686,301 to Li et al.; 6,346,563 to Li et al.; all of which are entirely incorporated by reference herein.

The rubber compound and treated textile substrate may be vulcanized at a temperature of above about 100°C, or above about 120°C, or in the range from about 150°C to about 220°C, for about 1 to 60 minutes to obtain a reinforced vulcanized rubber article, wherein the reinforcement is provided by the treated textile substrate. The vulcanization may be conducted by press vulcanization, steam vulcanization, or other suitable methods of vulcanization.

End-use products comprising a textile substrate treated with the adhesive composition as described herein include, without limitation, a printing blanket, reinforcing yarns or fabrics used in rubber hoses, reinforcing belting fabrics, V-belts, automotive transmission belts, reinforcing tire cord, tire cap ply, tire body ply, tire bead wrap, tire gum strip, and/or chafer fabrics.

### EXAMPLES

The following examples further illustrate the subject matter described above but, of course, should not be construed as in any way limiting the scope thereof.

### I. Test Methods

### A. Adhesion Test

Adhesion values were obtained according to the following procedure:
1. Two 8 inch by 8 inch pieces of fabric that were treated with the adhesive composition of the present invention were used to prepare a composite textile substrate - rubber article as shown below (plain white paper was used as a barrier layer): 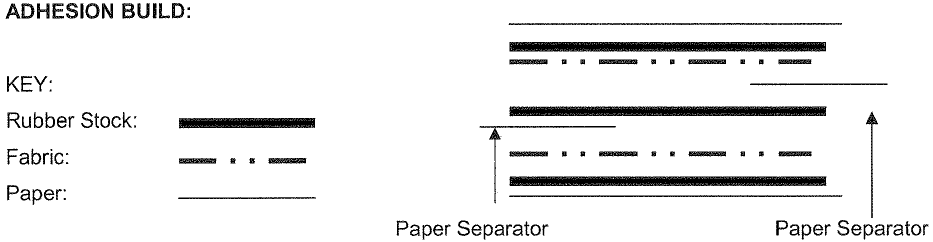
2. The composite material was cured for 30 minutes at 300 degrees F and 13,000 psi of pressure.
3. After curing, the composite material was allowed to cool and rest at room temperature before being cut in 8 inch by 1 inch size samples.
4. The 1 inch composite samples were placed in a Instron machine for adhesion testing. The direction of pull was the warp direction. The cross head speed was set at 2 inches / minute and the load setting was 5%.
5. The duration of testing was 3 inches of chart travel.
6. The first peak on the chart was omitted. The "adhesion value" was recorded as the average of the next 10 highest peaks.
7. If the adhesion strip broke during the test, the highest value from reading the chart on the Instron Console was recorded as the "adhesion value."

### B. Wicking Test

Wicking was determined according to the following test procedure:
1. Fabric treated with the adhesive composition of the present invention was cut into sample sizes that were 1 inch wide in the filling direction and 10 inches long in the warp direction.
2. A base-line mark was made with a permanent marker at a point on each fabric strip measuring 2 inches from one end (parallel to the filling direction). The purpose of this marking was to measure past the base-line fluid level, which was 2 inches.
3. The fabric strips were then hung vertically and immersed in a solution containing a mixture of either: (a) green dye and water, (b) green dye and a wash solution containing water, glycol and surfactant, or (c) green dye and a pressroom solvent (mineral spirits).
4. The fabric strips were allowed to hang for 24 hours.
5. The amount of wicking (movement of the green dyestuff up the fabric strip) was measured in inches starting at the base-line mark that was drawn on the strip.

### II. Textile Substrates

The following fabrics were tested with the adhesive compositions of the present invention:
Fabric A was a plain weave fabric comprised of a blend of 73% polyester and 27% cotton fiber. The warp yarns were made up of 36/1 50/50 polyester cotton fiber and
the filling yarns were made up of 1/150/72 semi-dull round textured filament polyester fiber. The fabric had a finished weight of approximately 3.75 ounces per square yard.
Fabric B was a plain weave fabric comprised of a blend of 63% cotton and 37% polyester fiber. The warp yarns were made up of 30/2 Egyptian cotton fiber and the filling yarns were made up of 1/150/72 semi-dull round textured filament polyester fiber. The fabric had a finished weight of approximately 5.15 ounces per square yard.
Fabric C was an Oxford weave fabric comprised of a blend of 79% cotton and 21 % polyester fiber. The warp yarns were made up of 20.0/1 73% Giza / 27% Pima OE 4.9 TM cotton fiber and the filling yarns were made up of 1/150/72 semi-dull round textured filament polyester fiber. The fabric had a finished weight of approximately 5.73 ounces per square yard.
Fabric D was a plain weave fabric comprised of a blend of 64% lyocell and 36% polyester fiber. The warp yarns were made up of 28.5/1 100% lyocell RS 4.00 fiber and the filling yarns were made up of 1/150/72 semi-dull round textured filament polyester fiber. The fabric had a finished weight of approximately 4.05 ounces per square yard.
Fabric E was a plain weave fabric comprised of 100% polyester fiber. The warp yarns were made up of 11.6/1 100% T-B2 OE 3.80 spun polyester fiber and the filling yarns were made up of 2/150/72 semi-dull round textured filament polyester fiber.
Fabric F was a plain weave fabric comprised of 100% polyester fiber. The warp yarns were made up of 15.0/1 100% T-B2 OE 3.60 polyester fiber and the filling yarns were made up of 1/150/72 semi-dull round textured filament polyester fiber. The fabric had a finished weight of approximately 5.15 ounces per square yard.

### III. Formulations

The following formulation was prepared:

| Formulation 1 | |
|---|---|
| Component | Amount (% by weight) |
| Resorcinol | 4.4% |
| Formaldehyde (37% aqueous solution) | 2.2% |
| Caustic | 0.5% |
| Synfac BR (a wetting agent available from Milliken Chemical of Spartanburg, SC) | 0.5% |
| AG-E300D (a fluorocarbon-containing anti-wicking agent, available from Asahi Glass Co.) | as indicated in Tables 1 - 3 |
| Water | at least 80% - the amount for each Sample |
| | varied as water was used to make-up the |
| | rest of a 100% by weight formulation |

### IV. Test Results

Several fabrics were coated with Formulation 1, including an anti-wicking agent as indicated below. The coating was padded onto each fabric by passing the fabric through a pad containing a mixture of Formulation 1 with the anti-wicking agent. Each fabric was then tested for adhesion to nitrile rubber and for wicking according to the Test Methods disclosed herein. Test results are provided in Table 1.

**Table 1: Effects of Anti-wick Levels on Adhesion and Wicking**

| Treatment | Fabric | Adhesion Test¹ (lbs.) | | Anti-wick Test (vertical inches wicked in 24 hours) | | |
|---|---|---|---|---|---|---|
| Level | Sample | Test 1 | Test 2 | (a) Water | (b) Media Fount. Sol. | (c) Wash V 60 ALL |
| | | | | | | |
| Untreated | Fabric C | 24.77 | | 2.3 | 2.2 | 6.0 |
| 3.0% AW | Fabric C | 33.55 | 33.55 | 0.1 | 0.5 | 3.3 |
| 3.5% AW | Fabric C | 33.63 | 33.83 | 0.2 | 0.3 | 3.8 |
| 4.0% AW | Fabric C | 35.35 | 33.83 | 0.1 | 0.5 | 3.8 |
| 4.5% AW | Fabric C | 35.12 | 34.54 | 0.1 | 0.3 | 3.6 |
| 5.0% AW | Fabric C | 34.79 | 34.88 | 0.2 | 0.3 | 3.6 |
| 7.0% AW | Fabric C | 29.92 | 29.94 | 0.3 | 0.0 | 1.5 |
| 9.0% AW | Fabric C | 30.61 | 30.64 | 0.1 | 0.2 | 2.0 |
| 11.0% AW | Fabric C | 29.86 | 30.00 | 0.1 | 0.2 | 2.2 |
| | | | | | | |
| Untreated | Fabric F | 24.07 | | 4.7 | 3.7 | 5.4 |
| 3.0% AW | Fabric F | 35.57 | 34.95 | 0.0 | 0.2 | 1.5 |
| 3.5% AW | Fabric F | 34.84 | 33.47 | 0.1 | 0.1 | 1.6 |
| 4.0% AW | Fabric F | 35.49 | 37.53 | 0.0 | 0.3 | 1.2 |
| 4.5% AW | Fabric F | 35.04 | 33.91 | 0.1 | 0.2 | 0.9 |
| 5.0% AW | Fabric F | 32.54 | 32.82 | 0.0 | 0.2 | 1.0 |
| 7.0% AW | Fabric F | 32.52 | 32.02 | 0.2 | 0.0 | 0.6 |
| 9.0% AW | Fabric F | 34.32 | 34.35 | 0.3 | 0.2 | 0.3 |
| 11.0% AW | Fabric F | 34.63 | 34.51 | 0.3 | 0.2 | 0.6 |
| | | | | | | |
| Untreated | Fabric D | 18.03 | | 3.5 | 2.5 | 4.5 |
| 7.0% AW | Fabric D | 33.94 | 34.38 | 0.3 | 0.2 | 0.3 |
| 9.0% AW | Fabric D | 33.67 | 32.68 | 0.3 | 0.2 | 0.5 |
| 11.0% AW | Fabric D | 34.63 | 34.51 | 0.1 | 0.2 | 0.5 |

| | | | | | | |
|---|---|---|---|---|---|---|
| ¹Test 1 and Test 2 refer to duplicate samples so that an average of two samples could be calculated. | | | | | | |

Several fabrics were coated with (a) 2% of an anti-wicking agent only, (b) a traditional RFL composition (no anti-wicking agent), (c) an RF formulation (no anti-wicking agent), and (d) Formulation 1, which contained 2% of the anti-wicking agent. The coating was padded onto each fabric by passing the fabric through a pad containing a mixture of the chemistry being applied to the fabric. Each fabric was then tested for adhesion to nitrile rubber and for wicking according to the Test Methods disclosed herein. Test results are provided in Table 2 and Table 3.

**Table 2: Adhesion Values For Various Fabrics at 2% Anti-wicking Content²**

| **Sample** | **Adhesion: Untreated (lbs.)** | **Adhesion: Anti-wick only (lbs.)** | **Adhesion: RFL (lbs.)** | **Adhesion: RF only (lbs.)** | **Adhesion: RF with Anti-wick (lbs.)** |
|---|---|---|---|---|---|
| Fabric A | 15.14 | 16.61 | 28.35 | 33.00 | 32.14 |
| Fabric B | 18.09 | 18.11 | 30.66 | 33.25 | 33.88 |
| Fabric C | 24.77 | 21.89 | 34.89 | 34.63 | 40.31 |
| Fabric D | 18.03 | 17.60 | 43.63 | 41.28 | 39.64 |
| Fabric E | 24.07 | 24.71 | 36.00 | 37.23 | 36.04 |

| | | | | | |
|---|---|---|---|---|---|
| ²Each value is an average of two samples that were prepared and tested. | | | | | |

**Table 3: Wicking Distance For Various Fabrics at 2% Anti-wicking Content**

| **Sample** | **Wicking: Untreated (inches)** | **Wicking: Anti-wick only (inches)** | **Wicking: RFL (inches)** | **Wicking: RF only (inches)** | **Wicking: RF with Anti-wick (inches)** |
|---|---|---|---|---|---|
| Fabric A | 3.1 | 0.5 | 1.7 | 2.2 | 0.3 |
| Fabric B | 2.8 | 0.6 | 2.0 | 3.9 | 0.5 |
| Fabric C | 2.7 | 0.7 | 0.4 | 1.4 | 0.6 |
| Fabric D | 3.7 | 0.7 | 1.4 | 2.2 | 0.7 |
| Fabric E | 4.8 | 0.6 | 3.0 | 0.9 | 0.3 |

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the subject matter of this application (especially in the context of the following claims) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the subject matter of the application and does not pose a limitation on the scope of the subject matter unless otherwise claimed. No language in the specification should be construed as indicating any non-claimed element as essential to the practice of the subject matter described herein.

Preferred embodiments of the subject matter of this application are described herein, including the best mode known to the inventors for carrying out the claimed subject matter. Variations of those preferred embodiments may become apparent to those of ordinary skill in the art upon reading the foregoing description. The inventors expect skilled artisans to employ such variations as appropriate, and the inventors intend for the subject matter described herein to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the present disclosure unless otherwise indicated herein or otherwise clearly contradicted by context.

These and other modifications and variations to the present invention may be practiced by those of ordinary skill in the art, without departing from the spirit and scope of the present invention. Furthermore, those of ordinary skill in the art will appreciate that the foregoing description is by way of example only, and is not intended to limit the scope of the invention described in the appended claims.

## Claims

1. A composition which is suitable for adhering a textile substrate to a rubber material, and which comprises an aqueous mixture of
(i) at least one phenol compound,
(ii) at least one aldehyde compound, and
(iii) at least one fluorocarbon-containing compound.

2. The composition of claim 1, wherein the at least one phenol compound is resorcinol.

3. The composition of claim 1, wherein the at least one aldehyde compound is formaldehyde.

4. The composition of claim 1, wherein the at least one fluorocarbon-containing compound is a non-ionic fluorocarbon having an average carbon chain length of six.

5. The composition of claim 1, wherein the amount of fluorocarbon-containing compound is in the range of 0.1-20 wt.-%, preferably 0.5-15 wt.-%, and more preferably 1-5 wt.-%.

6. A textile substrate having a first surface and a second surface wherein the composition of any of claims 1-5 is applied to at least one of these surfaces.

7. The textile substrate of claim 6, wherein the textile substrate is a woven fabric.

8. The textile substrate of claim 7, wherein the woven fabric is comprised of fibers selected from 100% polyester, blends of polyester and regenerated cellulose, and blends of polyester and cotton.

9. An article, which comprises the textile substrate of any of claims 6-8 and a rubber material, wherein the textile substrate is adhered to the rubber material with the composition of any of claims 1-5.

10. The article of claim 9, which is a printing blanket comprising at least one layer of textile substrate and at least one layer of a rubber material, wherein the at least one layer of textile substrate is adhered to the at least one layer of rubber material with the composition of any of claims 1-5.

11. The article of claim 9 or 10, wherein the rubber material is nitrile rubber.

12. A process for treating a textile substrate, which comprises the steps of:
(a) impregnating the textile substrate with the composition of any of claims 1-5, and
(b) drying the impregnated textile substrate.
